# EUROPÄISCHE PATENTSCHRIFT

(11) **EP 3 069 934 B1**
(45) Veröffentlichungstag und Bekanntmachung des Hinweises auf die Patenterteilung: **14.03.2018**
(21) Anmeldenummer: 16152344.4
(22) Anmeldetag: 22.01.2016
(51) Int. Cl.: B60R 1/00

(54) **VERFAHREN ZUM ERZEUGEN EINES GESAMTBILDES EINER FAHRZEUGUMGEBUNG EINES FAHRZEUGES UND ENTSPRECHENDE VORRICHTUNG**
METHOD FOR GENERATING A COMBINED IMAGE OF THE SURROUNDINGS OF A VEHICLE AND CORRESPONDING DEVICE
PROCEDE DE FABRICATION D'UNE IMAGE ENTIERE D'UN ENVIRONNEMENT DE VEHICULE ET DISPOSITIF CORRESPONDANT

(30) Priorität: 19.03.2015 DE 102015204949
(43) Veröffentlichungstag der Anmeldung: 21.09.2016
(73) Patentinhaber: ROBERT BOSCH GMBH, 70442 Stuttgart (DE)
(72) Erfinder: Esparza Garcia, Jose Domingo, 70178 Stuttgart (DE); Irion, Albrecht, 70563 Stuttgart (DE); Vujicic, Milica, 70825 Korntal-Muenchingen (DE)

(56) Entgegenhaltungen:
- DE-A1-102007 017 038

## Beschreibung

Die vorliegende Erfindung betrifft ein Verfahren zum Erzeugen eines Gesamtbildes einer Fahrzeugumgebung eines Fahrzeuges. Auch betrifft die Erfindung eine Vorrichtung zum Erzeugen eines Gesamtbildes einer Fahrzeugumgebung eines Fahrzeuges.

### Stand der Technik

Aus dem Stand der Technik sind Rundumsicht-Systeme für Fahrzeuge bekannt, die ein Gesamtbild einer Fahrzeugumgebung eines entsprechenden Fahrzeuges erzeugen. Dabei umfasst das Gesamtbild eine zweidimensionale oder eine dreidimensionale Abbildung der Fahrzeugumgebung. Ein solches Gesamtbild dient als Orientierung für einen Fahrer eines Fahrzeuges mit einem genannten Rundumsicht-System. Orientiert sich der Fahrer an einem solchen Gesamtbild, so gewinnt er eine bessere Übersicht über die in dem Gesamtbild abgebildete Fahrzeugumgebung. Dadurch kann der Fahrer sicherer und einfacher fahren.

Ein genanntes Rundumsicht-System umfasst üblicherweise vier Kameras. Ist ein solches Rundumsicht-System an einem Fahrzeug angebracht, so befindet sich üblicherweise eine Kamera in einem Frontbereich des Fahrzeuges, eine Kamera in einem Heckbereich des Fahrzeuges und jeweils eine Kamera in einem jeden Seitensiegel des Fahrzeuges. Zum Erzeugen eines wie zuvor genannten Gesamtbildes, die eine dreidimensionale Abbildung der Fahrzeugumgebung umfasst, werden aktuell aufgenommene Bilder der mehreren Kameras auf eine zum Beispiel schüsselförmige Oberfläche projiziert. Dabei wird ein virtuelles Modell des Fahrzeuges in einem Zentralbereich des so erzeugten Gesamtbildes positioniert.

Die Schrift DE 10 2007 017 038 A1 beschreibt ein Verfahren zur Überwachung der Umgebung eines Fahrzeugs, bei dem ein Bild eines Bereichs um ein Fahrzeug angezeigt wird. Das Verfahren umfasst ein Erzeugen eines synthetisierten Bilds unter Verwendung eines neuesten aufgenommenen Bilds und eines früheren Bildes einer Kamera. Anschließend erfolgt ein Anzeigen des synthetisierten Bilds, wobei ein Verringern des Grads der Sichtbarkeit eines Bildbereichs durchgeführt wird, der sich auf das frühere Bild bezieht.

### Offenbarung der Erfindung

Erfindungsgemäß wird ein Verfahren zum Erzeugen eines Gesamtbildes einer Fahrzeugumgebung eines Fahrzeuges bereitgestellt. Dabei sind an dem Fahrzeug mehrere Kameras angebracht. Zur Erzeugung des Gesamtbildes werden ferner aktuell aufgenommene Bilder der mehreren Kameras zusammengesetzt. Auch ist eine erste Kamera der mehreren Kameras an einer Fahrzeugseite angebracht. Das erfindungsgemäße Verfahren umfasst einen Schritt eines Bestimmens wenigstens eines sich in einem ersten Bildbereich des Gesamtbildes befindlichen ersten Bildabschnittes, der eine Abbildung einer sich auf der Fahrzeugseite in einem geöffneten Zustand befindlichen Fahrzeugtür umfasst. Dabei entspricht der erste Bildbereich einem aktuell aufgenommenen Bild der ersten Kamera. Das erfindungsgemäße Verfahren umfasst ferner einen Schritt eines Ausblendens des wenigstens einen ersten Bildabschnittes und einen Schritt eines Ersetzens des wenigstens einen ersten Bildabschnittes mit wenigstens einer vordefinierten Bildstruktur in dem ersten Bildbereich.

Erfindungsgemäß wird ferner eine Vorrichtung zum Erzeugen eines Gesamtbildes einer Fahrzeugumgebung eines Fahrzeuges bereitgestellt. Dabei sind an dem Fahrzeug mehrere Kameras anbringbar. Ferner ist die Vorrichtung dazu ausgebildet, zur Erzeugung des Gesamtbildes aktuell aufgenommene Bilder der mehreren Kameras zusammenzusetzen. Auch ist eine erste Kamera der mehreren Kameras an einer Fahrzeugseite anbringbar. Weiterhin ist die Vorrichtung dazu ausgebildet, einen ersten Bildbereich des Gesamtbildes, der einem aktuell aufgenommenes Bild der ersten Kamera entspricht, gemäß dem erfindungsgemäßen Verfahren zu verändern, wenn die mehreren Kameras an dem Fahrzeug angebracht sind.

Die Unteransprüche zeigen bevorzugte Weiterbildungen der Erfindung.

Bei dem erfindungsgemäßen Verfahren ist der wenigstens eine erste Bildabschnitt bevorzugt jeweils gleich mit dem ersten Bildbereich. Alternativ ist der wenigstens eine erste Bildabschnitt jeweils kleiner als der erste Bildbereich.

Anders ausgedrückt wird bei Vorliegen einer sich auf der Fahrzeugseite in dem geöffneten Zustand befindlichen Fahrzeugtür bevorzugt das aktuell aufgenommene Bild der ersten Kamera und folglich auch der erste Bildbereich gänzlich ausgeblendet. Dabei wird der ausgeblendete erste Bildbereich gänzlich mit einer vordefinierten Bildstruktur in dem Gesamtbild ersetzt.

In einem vorteilhaften Fall, in dem der wenigstens eine erste Bildabschnitt jeweils kleiner als der erste Bildbereich ist, können Informationen, die außerhalb des wenigstens einen ersten Bildabschnittes in dem ersten Bildbereich enthalten sind, auch nach dem Ausblenden des wenigstens einen ersten Bildabschnittes einem Fahrer des Fahrzeuges uneingeschränkt zur Verfügung gestellt werden. Dadurch kann der Fahrer weiterhin eine Übersicht über einen Teil eines in dem ersten Bildbereich abgebildeten Fahrzeugumgebungsbereiches gewinnen. Dadurch wird auch die Fahrsicherheit nicht mehr als notwendig beeinträchtigt. Eine maximal verwendbare Fläche des Gesamtbildes kann so auf einem Bildschirm des Fahrzeuges angezeigt werden, wodurch dem Fahrer mehrere Informationen über die Fahrzeugumgebung zur Verfügung gestellt werden können.

Bei einer ersten bevorzugten Ausführungsform der Erfindung umfasst das Bestimmen eines ersten Bildabschnittes des ersten Bildbereiches einen Schritt eines Definierens einer dem einen ersten Bildabschnitt zugeordneten ersten Linie. Dabei wird die erste Linie derartig definiert, dass diese an der Abbildung der in dem einen ersten Bildabschnitt abzubildenden Fahrzeugtür angrenzen würde, wenn ein von der Fahrzeugseite und der in dem einen ersten Bildabschnitt abzubildenden Fahrzeugtür gebildeter Öffnungswinkel maximal ist. Ferner umfasst das Bestimmen des einen ersten Bildabschnittes einen Schritt eines Definierens einer dem einen ersten Bildabschnitt zugeordneten zweiten Linie. Dabei wird die zweite Linie derartig definiert, dass diese entlang einer Randlinie des ersten Bildbereiches verläuft. Ferner umfasst das Bestimmen des einen ersten Bildabschnittes einen Schritt eines derartigen Definierens des einen ersten Bildabschnittes, dass sich dieser jeweils zwischen der diesem zugeordneten ersten Linie und der diesem zugeordneten zweiten Linie erstreckt.

Bei der ersten bevorzugten Ausführungsform der Erfindung verläuft die dem einen ersten Bildabschnitt zugeordnete zweite Linie bevorzugt entlang derjenigen Randlinie des ersten Bildbereiches, die sich gegenüber der Abbildung der in dem einen ersten Bildabschnitt abzubildenden Fahrzeugtür am nahesten befindet. Bei der ersten bevorzugten Ausführungsform der Erfindung verläuft die dem einen ersten Bildabschnitt zugeordnete zweite Linie weiter bevorzugt entlang derjenigen Grenzlinie, durch die der erste Bildbereich und ein zweiter Bildbereich des Gesamtbildes getrennt werden. Dabei entspricht der zweite Bildbereich einem aktuell aufgenommenen Bild einer zweiten Kamera der mehreren Kameras. Ferner sind die erste Kamera und die zweite Kamera benachbart an dem Fahrzeug angebracht.

Bei einer zweiten bevorzugten Ausführungsform der Erfindung, die vorzugsweise mit der ersten bevorzugten Ausführungsform kombiniert werden kann, ist die erste Kamera an einer sich auf der Fahrzeugseite befindlichen ersten Fahrzeugtür angebracht. Weiter bevorzugt ist hier die erste Fahrzeugtür unmittelbar mit einem Frontbereich des Fahrzeuges benachbart. Vorzugsweise ist hier die erste Kamera an einem Seitenspiegel der sich auf der Fahrzeugseite befindlichen ersten Fahrzeugtür angebracht.

Bei der zweiten bevorzugten Ausführungsform der Erfindung umfasst das erfindungsgemäße Verfahren einen Schritt eines Bestimmens einer aktuellen Position der ersten Kamera, wenn sich die erste Fahrzeugtür in einem geöffneten Zustand befindet. Ferner erfolgt hier ein Schritt eines Bestimmens von aktuellen extrinsischen Kalibrierungsparametern der ersten Kamera anhand der aktuellen Position der ersten Kamera. Auch erfolgt hier ein Schritt eines Durchführens des Bestimmens des wenigstens einen ersten Bildabschnittes, der eine Abbildung der sich in dem geöffneten Zustand befindlichen ersten Fahrzeugtür umfasst, anhand der aktuellen extrinsischen Kalibrierungsparameter der ersten Kamera.

Bei der zweiten bevorzugten Ausführungsform der Erfindung ist an der ersten Fahrzeugtür bevorzugt ein Sensor zum Erfassen einer Bewegung der ersten Fahrzeugtür angebracht. Vorzugsweise ist hier der Sensor entlang einer Achse der ersten Fahrzeugtür angeordnet. Bei der zweiten Ausführungsform der Erfindung umfasst das erfindungsgemäße Verfahren bevorzugt ein Schritt eines Bestimmens eines von der Fahrzeugseite und der ersten Fahrzeugtür aktuell gebildeten Öffnungswinkels anhand von Sensorsignalen des an der ersten Fahrzeugtür angebrachten Sensors, wenn sich die erste Fahrzeugtür in dem geöffneten Zustand befindet. Ferner erfolgt hier ein Schritt eines Durchführens des Bestimmens der aktuellen Position der ersten Kamera anhand des zwischen der Fahrzeugseite und der ersten Fahrzeugtür aktuell gebildeten Öffnungswinkels.

Bei der zweiten bevorzugten Ausführungsform der Erfindung umfasst das erfindungsgemäße Verfahren alternativ oder zusätzlich zu dem Schritt des Bestimmens des zuvor eingeführten Öffnungswinkels bevorzugt einen Schritt eines Bestimmens eines der ersten Kamera zugeordneten optischen Flusses von Bildern, die während eines Öffnens der ersten Fahrzeugtür mittels der ersten Kamera aufgenommen werden. Ferner erfolgt hier ein Schritt eines Durchführens des Bestimmens der aktuellen Position der ersten Kamera anhand des dieser zugeordneten optischen Flusses.

Bei einem zuvor beschriebenen Verfahren umfasst das Gesamtbild vorzugsweise eine zweidimensionale oder eine dreidimensionale Abbildung der Fahrzeugumgebung.

Bevorzugt befindet sich auf jeder Fahrzeugseite eine erste Kamera. Weiter bevorzugt befindet sich in dem Frontbereich und/oder in dem Heckbereich jeweils eine zweite Kamera.

Bevorzugt wird ein zuvor beschriebenes Verfahren für jede erste Kamera durchgeführt. Weiter bevorzugt wird ein zuvor beschriebenes Verfahren für jede zweite Kamera durchgeführt.

Vorzugsweise ist die Vorrichtung dazu ausgebildet, einen oder jeden ersten Bildbereich des Gesamtbildes, der einem aktuell aufgenommenes Bild einer ersten Kamera entspricht, gemäß einem zuvor beschriebenen Verfahren zu verändern, wenn eine oder jede erste Kamera und bevorzugt eine oder jede zweite Kamera an dem Fahrzeug abgebracht sind.

Ein weiterer Aspekt der Erfindung betrifft ein Rundumsicht-System für ein Fahrzeug. Das erfindungsgemäße Rundumsicht-System umfasst vier an dem Fahrzeug anbringbare Kameras und eine zuvor beschriebene Vorrichtung.

### Kurze Beschreibung der Zeichnung

Nachfolgend werden Ausführungsbeispiele der Erfindung unter Bezugnahme auf die begleitende Zeichnung im Detail beschrieben. Für gleiche Komponenten und Parameter werden jeweils gleiche Bezugszeichen verwendet. In der Zeichnung ist:

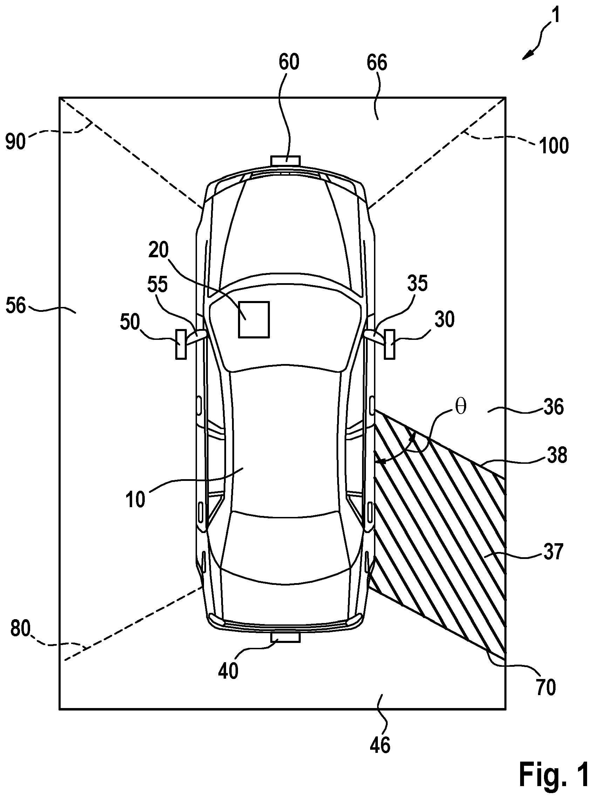

- Figur 1: ein gemäß einer ersten Ausführungsform der Erfindung erzeugtes Gesamtbild 1 einer Fahrzeugumgebung eines Fahrzeuges.

### Ausführungsform der Erfindung

Figur 1 zeigt ein gemäß einer ersten Ausführungsform der Erfindung erzeugtes Gesamtbild 1 einer Fahrzeugumgebung eines Fahrzeuges 10. Das Gesamtbild 1 wird mittels eines an dem Fahrzeug 10 angebrachten Rundumsicht-Systems (nicht explizit dargestellt) erzeugt. In einem Zentralbereich des Gesamtbildes 1 ist das Fahrzeug 10 durch ein adäquates virtuelles Modell abgebildet.

Das Rundumsicht-System umfasst eine Vorrichtung 20 zum Erzeugen des Gesamtbildes 1 und vier an dem Fahrzeug 10 angebrachte Kameras 30, 40, 50, 60.

Auf einer jeden Fahrzeugseite ist jeweils ein Seitenspiegel 35, 55 angebracht. An jedem Seitenspiegel 35, 55 ist jeweils eine erste Kamera 30, 50 angebracht. Ferner ist sowohl in einem Heckbereich des Fahrzeuges als auch in einem Frontbereich des Fahrzeuges jeweils eine zweite Kamera 40, 60 angebracht. Jede Kamera 30, 40, 50, 60 ist dazu ausgebildet, Bilder von einem dieser zugeordneten Fahrzeugumgebungsbereich aufzunehmen.

Eine entlang einem Beifahrersitz verlaufende Fahrzeugseite wird auch als Beifahrerseite genannt. Eine entlang einem Fahrersitz verlaufende Fahrzeugseite wird auch als Fahrerseite genannt.

Das Fahrzeug 10, die Vorrichtung 20, die vier Kameras 30, 40, 50, 60 und die Seitenspiegel 35, 55 sind in der Figur 1 stark schematisiert dargestellt.

Auf jeder Fahrzeugseite befinden sich eine erste Fahrzeugtür, die unmittelbar mit dem Frontbereich des Fahrzeuges benachbart ist und eine zweite Fahrzeugtür, die in einem geschlossenen Zustand, unmittelbar mit dem Heckbereich des Fahrzeuges 10 benachbart ist.

Zur Vereinfachung der Darstellung aus der Figur 1 wurden die zwei Fahrzeugseiten und die vier Fahrzeugtüren nicht mit Bezugszeichen versehen.

An jeder erste Fahrzeugtür ist jeweils einer der zwei Seitenspiegel 35, 55 angebracht.

Die Vorrichtung 20 ist dazu ausgebildet, zur Erzeugung des Gesamtbildes 1 aktuell aufgenommene Bilder der vier Kameras 30, 40, 50, 60 zusammenzusetzen.

Das Gesamtbild 1 umfasst vier Bildbereiche 36, 46, 56, 66, die jeweils einer der vier Kameras 30, 40, 50, 60 zugeordnet sind und jeweils einem aktuell aufgenommenen Bild der zugeordneten Kamera 30, 40, 50, 60 entsprechen. Ferner ist jeder ersten Kamera 30, 50 jeweils ein erster Bildbereich 36, 56 der vier Bildbereiche 36, 46, 56, 66 zugeordnet. Ferner ist jeder zweiten Kamera 40, 60 jeweils ein zweiter Bildbereich 46, 66 der vier Bildbereiche 36, 46, 56, 66 zugeordnet.

Das Gesamtbild 1 umfasst eine erste Grenzlinie 70, durch die der erste Bildbereich 36, der der ersten Kamera 30 der Beifahrerseite zugordnet ist, und der zweite Bildbereich 46, der der zweiten Kamera 40 des Heckbereiches zugeordnet ist, voneinander getrennt werden. Das Gesamtbild 1 umfasst ferner eine zweite Grenzlinie 80, durch die der zweite Bildbereich 46, der der zweiten Kamera 40 des Heckbereiches zugeordnet ist, und der erste Bildbereich 56, der der ersten Kamera 50 der Fahrerseite zugordnet ist, voneinander getrennt werden. Auch umfasst das Gesamtbild 1 eine dritte Grenzlinie 90, durch die der erste Bildbereich 56, der der ersten Kamera 50 der Fahrerseite zugordnet ist, und der zweite Bildbereich 66, der der zweiten Kamera 60 des Frontbereiches zugeordnet ist, voneinander getrennt werden. Weiterhin umfasst das Gesamtbild 1 eine vierte Grenzlinie 100, durch die der zweite Bildbereich 66, der der zweiten Kamera 60 des Frontbereiches zugeordnet ist, und der erste Bildbereich 36, der der ersten Kamera 30 der Beifahrerseite zugordnet ist, voneinander getrennt werden.

An dem Fahrzeug 10 ist eine Sensorik (nicht dargestellt) vorgesehen, die dazu ausgebildet ist, eine sich in einem geöffneten Zustand befindlichen Fahrzeugtür zu erkennen und für jede sich in dem geöffneten Zustand befindliche Fahrzeugtür ein der entsprechenden Fahrzeugtür zugeordnetes Signal zu erzeugen und der Vorrichtung 20 bereitzustellen. Die Vorrichtung 20 ist dazu ausgebildet, beim Vorliegen jedes solchen Signals zu erkennen, dass sich die dem entsprechenden Signal zugeordnete Fahrzeugtür in dem geöffneten Zustand befindet.

Die Vorrichtung 20 ist ferner dazu ausgebildet, einen jeden sich in einem ersten Bildbereich 36, 56 befindlichen und gegenüber diesem kleineren ersten Bildabschnitt, der eine Abbildung einer sich in dem geöffneten Zustand befindlichen Fahrzeugtür umfasst, zu bestimmen. Auch ist die Vorrichtung 20 dazu ausgebildet, jeden bestimmten ersten Bildabschnitt auszublenden und mit einer vordefinierten Bildstruktur 37, die aus einer straffierten Fläche besteht, zu ersetzen.

Die Vorrichtung 20 ist weiterhin dazu ausgebildet, jeden ersten Bildabschnitt, der eine Abbildung einer sich in einem geöffneten Zustand befindlichen zweiten Fahrzeugtür umfasst, derartig zu definieren, dass sich dieser zwischen einer dem entsprechenden ersten Bildabschnitt zugeordnete ersten Linie 38 und einer dem entsprechenden ersten Bildabschnitt zugeordneten zweiten Linie erstreckt.

Jede erste Linie 38 ist derartig definiert, dass diese an der Abbildung der in dem dieser zugeordneten ersten Bildabschnitt abzubildenden zweiten Fahrzeugtür angrenzen würde, wenn ein von der entsprechende Fahrzeugseite und der entsprechenden zweiten Fahrzeugtür gebildeter Öffnungswinkel θ maximal ist. Jeder maximale Öffnungswinkel θ, der von einer Fahrzeugseite und einer sich auf der entsprechenden Fahrzeugseite befindlichen zweiten Fahrzeugtür gebildet wird, ist bevorzugt aus Herstellerangaben für das Fahrzeug 10 bekannt.

Jede zweite Linie ist derartig definiert, dass diese entlang derjenigen Grenzlinie 70, 80 verläuft, durch die derjenige erste Bildbereich 36, 56, in dem sich der der entsprechenden zweiten Linie zugeordnete erste Bildabschnitt befindet, und der zweite Bildbereich 46, der der zweiten Kamera 40 des Heckbereiches zugeordnet ist, voneinander getrennt werden.

Ferner ist die Vorrichtung 20 dazu ausgebildet, eine aktuelle Position jeder ersten Kamera 30, 50 zu bestimmen, wenn sich diejenige erste Fahrzeugtür in einem geöffneten Zustand befindet, die sich auf derselben Fahrzeugseite wie die entsprechende erste Kamera 30, 50 befindet. Auch ist die Vorrichtung 20 dazu ausgebildet, aktuelle extrinsische Kalibrierungsparameter jeder ersten Kamera 30, 50 anhand der aktuellen Position der entsprechenden ersten Kamera 30, 50 zu bestimmen. Weiterhin ist die Vorrichtung 20 dazu ausgebildet, jeden ersten Bildabschnitt, der eine Abbildung einer sich in einem geöffneten Zustand befindlichen ersten Fahrzeugtür umfasst, anhand der aktuellen extrinsischen Kalibrierungsparameter der entsprechenden ersten Kamera 30, 50 zu bestimmen.

Aus der Figur 1 ist ersichtlich, dass sich bei dem Fahrzeug 10, dessen Fahrzeugumgebung in dem Gesamtbild 1 dargestellt ist, sowohl die erste Fahrzeugtür der Beifahrerseite, die erste Fahrzeugtür der Fahrerseite und die zweite Fahrzeugtür der Fahrerseite jeweils in einem geschlossenen Zustand befinden.

Aus der Figur 1 ist ferner ersichtlich, dass sich bei dem Fahrzeug 10, dessen Fahrzeugumgebung in dem Gesamtbild 1 dargestellt ist, nur die zweite Fahrzeugtür der Beifahrerseite in dem geöffneten Zustand befindet. Deswegen ist in dem Gesamtbild 1 nur derjenige erste Bildabschnitt, der die Abbildung der sich auf der Beifahrerseite befindlichen zweiten Fahrzeugtür umfasst, mit der vordefinierten Bildstruktur 37 ersetzt worden. Aus der Figur 1 ist leicht ersichtlich, dass sich der erste Bildabschnitt, der die Abbildung der sich auf der Beifahrerseite befindlichen zweiten Fahrzeugtür umfasst, zwischen der diesem zugeordnete ersten Linie 38 und der ersten Grenzlinie 70 erstreckt. In der Figur 1 ist auch der maximale Öffnungswinkel θ dargestellt, der von der Beifahrerseite und der sich auf der Beifahrerseite befindlichen zweiten Fahrzeugtür gebildet werden kann.

Neben der voranstehenden schriftlichen Offenbarung wird hiermit zur weiteren Offenbarung der Erfindung ergänzend auf die Darstellung in der Figur 1 Bezug genommen.

## Patentansprüche

1. Verfahren zum Erzeugen eines Gesamtbildes (1) einer Fahrzeugumgebung eines Fahrzeuges (10), wobei an dem Fahrzeug (10) mehrere Kameras (30, 40, 50, 60) angebracht sind, zur Erzeugung des Gesamtbildes (1) aktuell aufgenommene Bilder der mehreren Kameras (30, 40, 50, 60) zusammengesetzt werden und eine erste Kamera (30, 50) der mehreren Kameras (30, 40, 50, 60) an einer Fahrzeugseite angebracht ist, wobei folgende Schritte durchgeführt werden
Bestimmen wenigstens eines sich in einem ersten Bildbereich (36, 56) des Gesamtbildes (1) befindlichen ersten Bildabschnittes, der eine Abbildung einer sich auf der Fahrzeugseite in einem geöffneten Zustand befindlichen Fahrzeugtür umfasst, wobei der erste Bildbereich (36, 56) einem aktuell aufgenommenen Bild der ersten Kamera (30, 50) entspricht,
Ausblenden des wenigstens einen ersten Bildabschnittes und
Ersetzen des wenigstens einen ersten Bildabschnittes mit wenigstens einer vordefinierten Bildstruktur (37) in dem ersten Bildbereich (36, 56), wobei das Bestimmen eines ersten Bildabschnittes des ersten Bildbereiches (36, 56) folgende Schritte umfasst:
Definieren einer einem ersten Bildabschnitt zugeordneten ersten Linie (38) derartig, dass diese an der Abbildung der in dem einen ersten Bildabschnitt abzubildenden Fahrzeugtür angrenzen würde, wenn ein von der Fahrzeugseite und der in dem einen ersten Bildabschnitt abzubildenden Fahrzeugtür gebildeter Öffnungswinkel (θ) maximal ist, und
Definieren einer dem einen ersten Bildabschnitt zugeordneten zweiten Linie derartig, dass diese entlang derjenigen Randlinie des ersten Bildbereiches (36, 56) verläuft, die sich gegenüber der Abbildung der in dem einen ersten Bildabschnitt abzubildenden Fahrzeugtür bevorzugt am nahesten befindet, und
Definieren des einen ersten Bildabschnittes derartig, dass sich dieser jeweils zwischen der diesem zugeordneten ersten Linie (38) und der diesem zugeordneten zweiten Linie erstreckt, wobei folgender Schritt durchgeführt wird
Positionieren jeder zweiten Linie derartig, das diese entlang derjenigen Grenzlinie (70, 80, 90, 100) verläuft, durch die der erste Bildbereich (36, 56) und ein zweiter Bildbereich (46, 66) des Gesamtbildes voneinander getrennt werden, wobei der zweite Bildbereich (46, 66) einem aktuell aufgenommenen Bild einer zweiten Kamera (40, 60) der mehreren Kameras (30, 40, 50, 60) entspricht und die erste Kamera (30, 50) und die zweite Kamera (40, 60) benachbart an dem Fahrzeug (10) angebracht sind, wobei
die erste Kamera (30, 50) an einer sich auf der Fahrzeugseite befindlichen ersten Fahrzeugtür angebracht ist,
**dadurch gekennzeichnet, dass** folgender Schritt durchgeführt wird Bestimmen einer aktuellen Position der ersten Kamera (30, 50), wenn sich die erste Fahrzeugtür in einem geöffneten Zustand befindet,
Bestimmen von aktuellen extrinsischen Kalibrierungsparametern der ersten Kamera (30, 50) anhand der aktuellen Position der ersten Kamera, und
Durchführen des Bestimmens des wenigstens einen ersten Bildabschnittes, der eine Abbildung der sich in dem geöffneten Zustand befindlichen ersten Fahrzeugtür umfasst, anhand der aktuellen extrinsischen Kalibrierungsparameter der ersten Kamera (30, 50).

2. Verfahren nach Anspruch 1, **dadurch gekennzeichnet, dass** an der ersten Fahrzeugtür ein Sensor zum Erfassen einer Bewegung der ersten Fahrzeugtür angebracht ist, und das Verfahren folgende Schritte umfasst:
Bestimmen eines von der Fahrzeugseite und der ersten Fahrzeugtür aktuell gebildeten Öffnungswinkels anhand von Sensorsignalen des an der ersten Fahrzeugtür angebrachten Sensors, wenn sich die erste Fahrzeugtür in dem geöffneten Zustand befindet, und
Durchführen des Bestimmens der aktuellen Position der ersten Kamera (30, 50) anhand des zwischen der Fahrzeugseite und der ersten Fahrzeugtür aktuell gebildeten Öffnungswinkels.

3. Verfahren nach einem der vorhergehenden Ansprüche, **gekennzeichnet durch**:
Bestimmen eines der ersten Kamera (30, 50) zugeordneten optischen Flusses von Bildern, die während eines Öffnens der ersten Fahrzeugtür mittels der ersten Kamera (30, 50) aufgenommen werden, und
Durchführen des Bestimmens der aktuellen Position der ersten Kamera (30, 50) anhand des dieser zugeordneten bestimmten optischen Flusses.

4. Vorrichtung (20) zum Erzeugen eines Gesamtbildes (1) einer Fahrzeugumgebung eines Fahrzeuges, wobei an dem Fahrzeug (10) mehrere Kameras (30, 40, 50, 60) angebracht sind, die Vorrichtung (20) dazu ausgebildet ist, zur Erzeugung des Gesamtbildes (1) aktuell aufgenommene Bilder der mehreren Kameras (30, 40, 50, 60) zusammenzusetzen, und eine erste Kamera (30, 50) der mehreren Kameras (30, 40, 50, 60) an einer Fahrzeugseite angebracht ist, **dadurch gekennzeichnet, dass** die Vorrichtung (20) dazu ausgebildet ist, einen ersten Bildbereich des Gesamtbildes, der einem aktuell aufgenommenen Bild der ersten Kamera (30, 50) entspricht, gemäß einem Verfahren nach einem der Ansprüche 1 bis 3 zu verändern.

## Claims

1. Method for producing a total image (1) of a vehicle environment of a vehicle (10), wherein a plurality of cameras (30, 40, 50, 60) are mounted on the vehicle (10), currently recorded images of the plurality of cameras (30, 40, 50, 60) are joined to produce the total image (1) and a first camera (30, 50) of the plurality of cameras (30, 40, 50, 60) is mounted on a vehicle side, wherein the following steps are carried out:
determining at least one first image portion that is located in a first image region (36, 56) of the total image (1) and comprises an image of a vehicle door located on the vehicle side in an opened state, wherein the first image region (36, 56) corresponds to a currently recorded image of the first camera (30, 50), removing the at least one first image portion and
replacing the at least one first image portion with at least one predefined image structure (37) in the first image region (36, 56), wherein determining a first image portion of the first image region (36, 56) comprises the following steps:
defining a first line (38), which is associated with a first image portion, such that said line would adjoin the image of the vehicle door that is to be imaged in the one first image portion if an opening angle (θ) formed by the vehicle side and the vehicle door that is to be imaged in the one first image portion is maximal, and
defining a second line, which is associated with the one first image portion, such that said line extends along that perimeter line of the first image region (36, 56) which is preferably located closest with respect to the image of the vehicle door that is to be imaged in the one first image portion, and
defining the one first image portion such that the latter extends in each case between the first line (38), which is associated therewith, and the second line, which is associated therewith, wherein the following step is carried out:
positioning each second line such that it extends along that boundary line (70, 80, 90, 100) by which the first image region (36, 56) and a second image region (46, 66) of the total image are separated, wherein the second image region (46, 66) corresponds to a currently recorded image of a second camera (40, 60) of the plurality of cameras (30, 40, 50, 60), and the first camera (30, 50) and the second camera (40, 60) are mounted in adjacent fashion on the vehicle (10), wherein
the first camera (30, 50) is mounted on a first vehicle door located on the vehicle side,
**characterized in that** the following step is performed:
determining a current position of the first camera (30, 50) if the first vehicle door is in an opened state, determining current extrinsic calibration parameters of the first camera (30, 50) on the basis of the current position of the first camera, and
performing the determination of the at least one first image portion, which comprises an image of the first vehicle door that is in the opened state, on the basis of the current extrinsic calibration parameters of the first camera (30, 50).

2. Method according to Claim 1, **characterized in that** a sensor for capturing a movement of the first vehicle door is mounted on the first vehicle door, and the method comprises the following steps:
determining an opening angle currently formed by the vehicle side and the first vehicle door on the basis of sensor signals of the sensor that is mounted on the first vehicle door if the first vehicle door is in the opened state, and
performing the determination of the current position of the first camera (30, 50) on the basis of the opening angle that is currently formed between the vehicle side and the first vehicle door.

3. Method according to one of the preceding claims, **characterized by**:
determining an optical flow of images that is associated with the first camera (30, 50), the images being recorded by way of the first camera (30, 50) during an opening of the first vehicle door, and
performing the determination of the current position of the first camera (30, 50) on the basis of the determined optical flow that is associated therewith.

4. Apparatus (20) for producing a total image (1) of a vehicle environment of a vehicle, wherein a plurality of cameras (30, 40, 50, 60) are mounted on the vehicle (10), the apparatus (20) is configured to join currently recorded images of the plurality of cameras (30, 40, 50, 60) to produce the total image (1), and a first camera (30, 50) of the plurality of cameras (30, 40, 50, 60) is mounted on a vehicle side, **characterized in that** the apparatus (20) is configured to change a first image region of the total image that corresponds to a currently recorded image of the first camera (30, 50) in accordance with a method according to one of Claims 1 to 3.

## Revendications

1. Procédé pour générer une image globale (1) d'un environnement de véhicule d'un véhicule (10), dans lequel une pluralité de caméras (30, 40, 50, 60) sont montées sur le véhicule (10), des images actuelles acquises par la pluralité de caméras (30, 40, 50, 60) sont assemblées pour générer l'image globale (1) et une première caméra (30, 50) de la pluralité de caméras (30, 40, 50, 60) est montée sur un côté du véhicule, dans lequel les étapes suivantes sont effectuées :
déterminer au moins une première partie d'image située dans une première zone d'image (36, 56) de l'image globale (1), qui comprend une représentation d'une porte de véhicule située sur le côté du véhicule à l'état ouvert, dans lequel la première zone d'image (36, 56) correspond à une image actuelle acquise par la première caméra (30, 50),
masquer au moins une première partie d'image, et
remplacer ladite au moins une première partie d'image par au moins une structure d'image prédéfinie (37) dans la première zone d'image (36, 56), dans lequel la détermination d'une première partie d'image de la première zone d'image (36, 56) comprend les étapes suivantes :
définir une première ligne (38) associée à une première partie d'image de manière à ce qu'elle soit adjacente à la représentation de la porte de véhicule dont l'image doit être formée dans la première partie d'image lorsqu'un angle d'ouverture (θ) formé par le côté du véhicule et la porte de véhicule dont l'image doit être formée dans la première partie d'image est maximal, et
définir une deuxième ligne associée à ladite une première zone d'image de manière à ce qu'elle s'étende le long de la ligne de bord de la première partie d'image (36, 56) qui se situe de préférence le plus près de la représentation de la porte de véhicule dont l'image doit être formée dans ladite première partie d'image, et
définir ladite première partie d'image de manière à ce que celle-ci s'étende respectivement entre la première ligne (38) qui lui est associée et la deuxième ligne qui lui est associée, dans lequel l'étape suivante est effectuée :
positionner chaque deuxième ligne de manière à ce qu'elle s'étende le long de la ligne limite (70, 80, 90, 100) par laquelle la première zone d'image (36, 56) et une deuxième zone d'image (46, 66) de l'image globale sont séparées l'une de l'autre, dans lequel la deuxième zone d'image (46, 66) correspond à une image actuelle acquise par une seconde caméra (40, 60) de la pluralité de caméras (30, 40, 50, 60) et la première caméra (30, 50) et la deuxième caméra (40, 60) sont montées côté à côté sur le véhicule (10),
dans lequel la première caméra (30, 50) est montée sur une première porte de véhicule se situant sur le côté du véhicule,
**caractérisé en ce que** les étapes suivantes sont effectuées :
déterminer la position actuelle de la première caméra (30, 50) lorsque la première porte de véhicule est à l'état ouvert,
déterminer des paramètres d'étalonnage actuels extrinsèques de la première caméra (30, 50) sur la base de la position actuelle de la première caméra, et
effectuer la détermination de ladite au moins une première partie d'image, qui comprend une représentation de la première porte de véhicule ne se trouvant pas à l'état ouvert, sur la base du paramètre d'étalonnage actuel extrinsèque de la première caméra (30, 50).

2. Procédé selon la revendication 1, **caractérisé en ce qu'**un capteur destiné à détecter un mouvement de la première porte de véhicule est monté sur la première porte de véhicule et **en ce que** le procédé comprend les étapes suivantes :
déterminer un angle d'ouverture actuel formé par le côté du véhicule et la première porte de véhicule sur la base de signaux de capteur du capteur monté sur la première porte de véhicule lorsque la première porte de véhicule se trouve à l'état ouvert, et
effectuer la détermination de la position actuelle de la première caméra (30, 50) sur la base de l'angle d'ouverture actuel formé entre le côté du véhicule et la première porte de véhicule.

3. Procédé selon l'une quelconque des revendications précédentes, **caractérisé par** les étapes consistant à :
déterminer un flux optique associé à la première caméra (30, 50) d'images qui ont été acquises au moyen de la première caméra (30, 50) pendant une ouverture de la porte de véhicule, et
effectuer la détermination de la position actuelle de la première caméra (30, 50) sur la base dudit flux optique associé déterminé.

4. Dispositif (20) destiné à générer une image globale (1) d'un environnement de véhicule d'un véhicule, dans lequel une pluralité de caméras (30, 40, 50, 60) sont montées sur le véhicule (10), le dispositif (20) étant conçu pour assembler des images actuelles acquises par la pluralité de caméras (30, 40, 50, 60) pour générer l'image globale (1), et une première caméra (30, 50) de la pluralité de caméras (30, 40, 50, 60) est montée sur un côté du véhicule, **caractérisé en ce que** le dispositif (20) est conçu pour modifier une zone d'image de l'image globale qui correspond à une image actuelle acquise par la première caméra (30, 50), conformément à un procédé selon l'une quelconque des revendications 1 à 3.
